Europäisches Patentamt

European Patent Office

Office européen des brevets

(11) Veröffentlichungsnummer: **0 480 220 A1**

## (12) EUROPÄISCHE PATENTANMELDUNG

(21) Anmeldenummer: **91116095.0**

(22) Anmeldetag: **21.09.91**

(51) Int. Cl.5: **F25B 45/00**, F17C 5/00, F17C 13/02

(30) Priorität: **08.10.90 CH 3240/90**

(43) Veröffentlichungstag der Anmeldung:
**15.04.92 Patentblatt 92/16**

(84) Benannte Vertragsstaaten:
**AT BE DE ES FR GB IT NL SE**

(71) Anmelder: **Mock, Bruno Armin**
**Buolterlistrasse 63**
**CH-6052 Hergiswil NW(CH)**

(72) Erfinder: **Mock, Bruno Armin**
**Buolterlistrasse 63**
**CH-6052 Hergiswil NW(CH)**

(74) Vertreter: **Petschner, Goetz**
**Patentanwaltsbüro G. Petschner**
**Wannenstrasse 16**
**CH-8800 Thalwil(CH)**

(54) **In die Strömungswege einer Anlage zum Umfüllen gasförmiger und/oder flüssiggasförmiger Druckmedien einsetzbare Kontrollarmatur.**

(57) Die Kontrollarmatur ist dadurch gekennzeichnet, dass das Armaturgehäuse (20), frontseitig durch jeweils ein Sichtglas (21) gas- und flüssigkeitsdicht verschliessbare Kammern (22) aufweist zur Aufnahme und Befestigung je eines Manometermechanismus (23), dessen druckaufnehmendes Kapillarrohr (24) in einem Wandungsabschnitt des Gehäuses (20) gas- und flüssigkeitsdicht geführt ist und im betreffenden niederdruckseitigen resp. hochdruckseitigen Anschlussmittel-Kanalabschnitt (4 resp. 6) ausmündet.

EP 0 480 220 A1

Die vorliegende Erfindung betrifft eine in die Strömungswege einer Anlage zum Umfüllen gasförmiger und/oder flüssiggasförmiger Druckmedien einsetzbare Kontrollarmatur, welche sowohl niederdruckseitig als auch hochdruckseitig zum Anschluss an den Kreislauf einer zu füllenden Anlage dienende, absperrbare Anschluss-Stutzen sowie weitere, mit ersteren kommunizierende Anschluss-Stutzen für den Anschluss einer Vakuum-Pumpe resp. an einen das Druckmedium enthaltenden Vorratsbehälter umfasst, und bei welcher Manometer mit den gehäuseinneren Kanalabschnitten der Anschluss-Mittel in Wirkungsverbindung stehen.

In vielen Bereichen der Technik, beispielsweise in der Kühltechnik ist es notwendig, Druckmedien in Behältnisse umzufüllen, wobei letztere vorgängig zu evakuieren sind. Beispielsweise verlangen Kühlschränke oder insbesondere auch Auto-Klimaanlagen zur erstmaligen Ingangsetzung oder nach Reparaturen des Systems ein Einfüllen eines Kühlmittels, in der Regel in Form eines Flüssiggases, in den Kreislauf der Anlage, wofür dieser Kreislauf zunächst evakuiert werden muss.

Um diesen Vorgang auch in kleineren Werkstätten oder auch mobil durchführen zu können, ist es notwendig, dass sich der betreffende Monteur einer Kontrollarmatur bedienen kann, die eine genaue Beobachtung des nicht ungefährlichen Umfüllvorgangs zulässt.

Entsprechend befindet sich eine Kontrollarmatur der vorgenannten Art auf dem Markt, deren Armaturgehäuse in eine Niederdruckseite zum Evakuieren des zu füllenden Systems und in eine Hochdruckseite zur Gaseinfüllung unterteilt ist.

Solche Kontrollarmaturen sind unter dem Begriff 2-Weg-Monteurhilfen und 4-Weg-Monteurhilfen bekannt. Letztere sind zudem in einer wesentlich verbesserten Ausführungsform unter dem Begriff Mano-Vac-Monteurhilfe bekannt geworden (CH-Patente 656 694 und 673 886 des gleichen Anmelders).

Bei solchen Monteurhilfen kommuniziert mindestens niederdruckseitig und hochdruckseitig je ein gehäuseinnerer Führungskanal mit je einem aufschraubbaren Manometer.

Gerade hier aber liegt das Problem, da schon geringste Undichtheiten im Bereich des Gewindezapfens höchst unerwünschte und unkontrollierbare Druckabfälle zur Folge haben können. Da weiter solche Kontrollarmaturen im Einsatz starken mechanischen Beanspruchungen unterliegen und die vom Armaturgehäuse über einen relativ dünnen Gewindezapfen frei abragenden Manometer oft angeschlagen werden, sind solche Undichtheiten schon nach kurzem Gebrauch zu erwarten, abgesehen von der Gefahr, die Manometer sonstwie zu beschädigen.

Aufgabe der vorliegenden Erfindung ist nun die Schaffung einer Kontrollarmatur der vorgenannten Arten, bei welcher die erläuterten Undichtheiten mit Sicherheit vermieden werden und auch bei langer und heftiger Beanspruchung der Kontrollarmatur nicht auftreten können.

Dies wird nun erfindungsgemäss dadurch erreicht, dass das Armaturgehäuse, frontseitig durch jeweils ein Sichtglas gas- und flüssigkeitsdicht verschliessbare Kammern aufweist zur Aufnahme und Befestigung je eines Manometermechanismus, dessen druckaufnehmendes Kapillarrohr in einem Wandungsabschnitt des Gehäuses gas- und flüssigkeitsdicht geführt ist und im betreffenden niederdruckseitigen resp. hochdruckseitigen Anschlussmittel-Kanalabschnitt ausmündet.

Durch diese Massnahmen ist es nunmehr möglich, das Kapillarrohr nicht nur absolut dicht einzukitten oder dgl., sondern auch gegen jeden Druck von aussen zu schützen. Es entsteht eine absolut kompakte Bauweise mit voll integrierten Manometern, die zudem keines eigenen Gehäuses mehr bedürfen. Hierbei ist jede Gehäuseform für die Kontrollarmatur denkbar und es können zwei und mehr Manometerkammern vorgesehen sein.

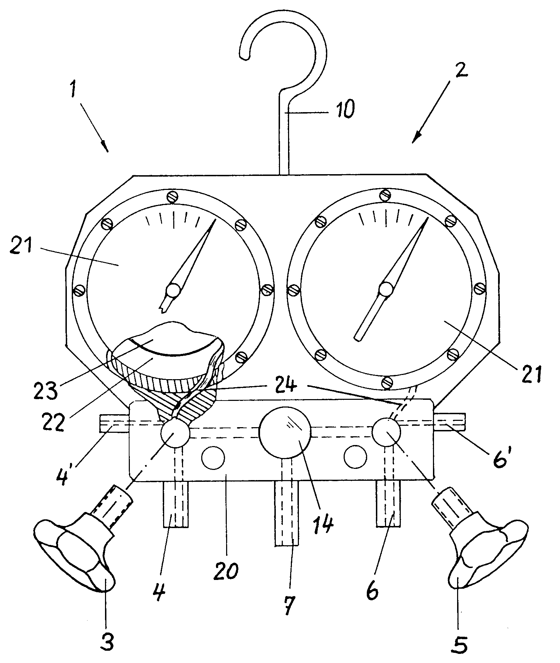

Eine beispielsweise Ausführungsform des Erfindungsgegenstandes ist nachfolgend anhand der Zeichnung, welche in Frontansicht eine erfindungsgemässe 2-Weg-Kontrollarmatur zeigt, näher erläutert.

Die sogenannte 2-Weg-Kontrollarmatur gemäss Figur umfasst ein Armaturgehäuse 20, das sowohl niederdruckseitig 1 als auch hochdruckseitig 2 zum Anschluss an den Kreislauf einer hier nicht näher gezeigten zu füllenden Anlage dienende, mit Ventil 3 absperrbare Anschluss-Stutzen 4 resp. 4' sowie weitere, mit ersteren durch gehäuseinnere Führungskanäle verbundene, mit Ventil 5 absperrbare Anschluss-Stutzen 6 resp. 6' für den Anschluss einer nicht näher gezeigten Vakuum-Pumpe u.a. aufweist. Hierbei lässt sich der Strömungsvorgang des Mediums zum Stutzen 7 am Gehäuse 20 in einem Schauglas 14 verfolgen. Mittels Haken 10 lässt sich die Kontrollarmatur an Ort aufhängen.

Soweit ist eine solche Kontrollarmatur bekannt.

Erfindungswesentlich ist hier, dass das Armaturgehäuse 20, frontseitig durch jeweils ein Sichtglas 21 gas- und flüssigkeitsdicht verschliessbare Kammern 22 aufweist zur Aufnahme und Befestigung je eines Manometermechanismus 23, dessen druckaufnehmendes Kapillarrohr 24 in einem Wandungsabschnitt des Gehäuses 20 gas- und flüssigkeitsdicht geführt ist und im betreffenden niederdruckseitigen resp. hochdruckseitigen Anschlussmittel-Kanalabschnitt 4 resp. 6 ausmündet.

Aus dem Vorbeschriebenen ergibt sich nunmehr eine Kontroll-Armatur von äusserst kompakter, sehr flacher Bauweise, welche sich optimal handhaben lässt.

Hierbei liegen verschiedene Modifikationen der vorbeschriebenen Konzeption durchaus im Rahmen des vorliegenden Erfindungsgedankens.

Die Figur zeigt hier eine Kontrollarmatur mit zwei Manometerkammern 22. Für die einleitend erwähnte Mano-Vac-Monteurhilfe ist ein solches Gehäuse mit drei Manometerkammern vorzusehen.

Zweckmässig ist das Armaturgehäuse ein Guss-Stück.

**Patentansprüche**

1. In die Strömungswege einer Anlage zum Umfüllen gasförmiger und/oder flüssiggasförmiger Druckmedien einsetzbare Kontrollarmatur, welche sowohl niederdruckseitig als auch hochdruckseitig zum Anschluss an den Kreislauf einer zu füllenden Anlage dienende, absperrbare Anschluss-Stutzen sowie weitere, mit ersteren kommunizierende Anschluss-Stutzen für den Anschluss einer Vakuum-Pumpe resp. an einen das Druckmedium enthaltenden Vorratsbehälter umfasst, und bei welcher Manometer mit den gehäuseinneren Kanalabschnitten der Anschluss-Mittel in Wirkungsverbindung stehen, dadurch gekennzeichnet, dass das Armaturgehäuse (20), frontseitig durch jeweils ein Sichtglas (21) gas- und flüssigkeitsdicht verschliessbare Kammern (22) aufweist zur Aufnahme und Befestigung je eines Manometermechanismus (23), dessen druckaufnehmendes Kapillarrohr (24) in einem Wandungsabschnitt des Gehäuses (20) gas- und flüssigkeitsdicht geführt ist und im betreffenden niederdruckseitigen resp. hochdruckseitigen Anschlussmittel-Kanalabschnitt (4 resp. 6) ausmündet.

2. Kontrollarmatur nach Anspruch 1, dadurch gekennzeichnet, dass das Armaturgehäuse mindestens zwei Manometerkammern (22) aufweist.

3. Kontrollarmatur nach Anspruch 1, dadurch gekennzeichnet, dass das Armaturgehäuse ein Guss-Stück ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | CH-A-673 886 (B.A.MOCK) 12. April 1990<br>* Zusammenfassung *<br>* Seite 3, Spalte 1, Zeile 7 - Seite 3, Spalte 2, Zeile 42 *<br>* Abbildungen 1,2 *<br>--- | 1 | F25B45/00<br>F17C5/00<br>F17C13/02 |
| A | US-A-4 058 016 (RITE AUTOTRONICS)<br>* Zusammenfassung *<br>* Abbildungen 1,2,5,11 *<br>* Spalte 1, Zeile 33 - Spalte 2, Zeile 22 *<br>--- | 1 | |
| A | CH-A-171 762 (FRANZ HERKENRATH A.-G.)<br>* Seite 1, Spalte 1, Absatz 1 *<br>* Seite 1, Spalte 2, Absatz 2 *<br>* Seite 2, Spalte 1, Absatz 11 - Seite 3, Spalte 1, Absatz 1 *<br>* Seite 4, Spalte 2, Absatz 2 *<br>* Abbildungen 1,2,4 *<br><br>----- | 1,2 | |
| | | | **RECHERCHIERTE SACHGEBIETE (Int. Cl.5)**<br><br>F17C<br>F25B<br>G01L |

Der vorliegende Recherchenbericht wurde für alle Patentansprüche erstellt

| Recherchenort | Abschlußdatum der Recherche | Prüfer |
|---|---|---|
| DEN HAAG | 17 JANUAR 1992 | SIEM T.D. |